# EUROPEAN PATENT SPECIFICATION

(11) **EP 2 236 021 B1**
(45) Date of publication and mention of the grant of the patent: **29.02.2012**
(21) Application number: 10075104.9
(22) Date of filing: 10.03.2010
(51) Int. Cl.: A01B 73/04

(54) **Agricultural device comprising a fold-up device**
Landwirtschaftliche Einrichtung mit einer Falteinrichtung
Machine agricole avec un dispositif de pliage

(30) Priority: 31.03.2009 NL 1036797
(43) Date of publication of application: 06.10.2010
(73) Proprietor: Lely Patent N.V., 3147 PA Maassluis (NL)
(72) Inventor: de Vries, Sjoerd Sieger, 9074 MC Hallum (NL)
(74) Representative: Corten, Maurice Jean F.M.

(56) References cited:
- DE-A1- 3 827 624
- US-A- 4 479 554
- US-B1- 7 313 902

## Description

The invention relates to a device for carrying out an agricultural operation, and in particular working vegetation located on the ground, wherein the device comprises a frame and a side panel which is fastened thereto in a longitudinal direction of the frame by means of a fold-up device and which is foldable by said fold-up device between a substantially horizontal working position and a substantially vertical transport position, wherein the fold-up device comprises a shaft part connected to the frame.

A device of this type is known inter alia from a mowing machine which is produced under the trade name Lely Splendimo^{®}. The mowing machine consists of a frame to which a few mowing discs are fastened and wherein a foldable side panel is fastened to two ends of the frame. The side panel serves to cover the space around the mowing discs where the mowed grass is scattered at high speed. In the working position, each side panel has a horizontal position. In the transport position, each side panel is raised in order in this way to limit the transport width. Other devices will all the features of the preamble of claim 1 are known from documents US 7 313 902 and US 4 479 554.

A drawback of the known device is that the points at which the side panel is coupled to the frame are loaded as a result of the wobbling of the side panel as the mowing machine moves.

The object of the invention is to at least partially eliminate this drawback.

This object is achieved by a device according to Claim 1, which is characterized in that the fold-up device comprises an element of the fold-up device, which element is fastened to the side panel and has a slot which is substantially vertical in the transport position, which slot is rotatable about the shaft part and is positioned in such a way with respect to the shaft part that the side panel is downwardly displaceable along the shaft part after folding-up.

The advantage of the new device is achieved by lowering the side panel over the length of the slot so that the side panel is displaced downward over a certain distance. This makes the distribution of weight of the side panel different from that in the transport position of the known agricultural machine. Above all as the agricultural device moves in the transport position, the risk of wobbling is limited to a greater extent than in the known agricultural machine. The weight moves closer to the hinge point (rotation point), so that the moment of the weight is effectively reduced.

In one embodiment, the device is provided with a locking device for locking the side panel in the transport position. For example, the locking device can comprise a first iocking point which is fastened to the frame and a second locking point forming part of the element of the fold-up device which is fastened to the side panel. The use of the locking device makes the side panel stabler in the transport position as the agricultural device advances. Moreover, the points at which the side panel is coupled to the frame are loaded still less during transport of the agricultural device.

In one embodiment, a side panel is fastened to two ends of the frame. This offers the advantage of a more compact transport position as a result of the reducing of the transport width. Another advantage is that the working width is increased, at a constant transport width of the agricultural device, since working devices, such as mowing discs, which are fastened to the bottom of the frame, can be installed closer to ends of the frame.

In one embodiment, the side panel is fastened to the frame by at least two hinges, wherein each hinge comprises an element of the fold-up device, which element is fastened to the side panel and has a slot which is substantially vertical in the transport position, which slot is rotatable about the shaft part and is positioned in such a way with respect to the shaft part that the side panel is downwardly displaceable along the shaft part after folding-up. In this way, the side panel is fastened more sturdily and the force is distributed over a few hinges.

In one embodiment, the side panel is provided with at least one handle. The advantage of this is that the side panel is folded up in a more convenient manner.

In one embodiment, the side panel is provided with a protective tarpaulin. The protective tarpaulin ensures that vegetation, for example grass, which is hurled away during high-speed operation from the bottom of the agricultural device by, for example, the mowing discs, is not cast outward. Even a broken part of the working device, such as a mowing blade, can be prevented. It is also possible to install a clip construction instead of the protective tarpaulin.

In one embodiment, the device is provided with a device for fixing the protective tarpaulin in the transport position. When transporting an agricultural device on public roads, it is important that the width of the agricultural device remains within the permitted limits. The protective tarpaulin, which protrudes partially outward after the folding-up of the side panel, forms part of the total width. If the agricultural device is sufficiently wide for the edges of the folded-up side panels to be at the limits of the permitted width, then the protective tarpaulin of the side panel is already outside this width. The use of the device for fixing the protective tarpaulin in the transport position solves the problem by pressing the sides of the protective tarpaulin against the sides of the side panel by means of, for example, a clip.

In one embodiment, the length of the slot is at most equal to the height of the protective tarpaulin if the side panel is longer than the height of the protective tarpaulin. An advantage of this is that working devices, such as mowing discs, which are fastened to the bottom of the frame, are at least partially protected at the sides of the device by the side panel during transportation.

In one embodiment, the length of slot is at most equal to the height of the side panel if the side panel is shorter than the height of the protective tarpaulin. An advantage of this is that the working devices, such as mowing discs, which are fastened to the bottom of the frame, are protected at the sides by the protective tarpaulin during transportation.

The invention will be described hereinafter in greater detail based on non-limiting exemplary embodiments, as represented in the drawings, in which:
- Figure 1 a is a schematic front view of an agricultural device in the working position;
- Figure 1b is a schematic front view of an agricultural device in the position between the working position and transport position;
- Figure 1c is a schematic front view of an agricultural device in the transport position, and
- Figure 2 is a schematic front view of a particular embodiment of the agricultural device in the transport position.

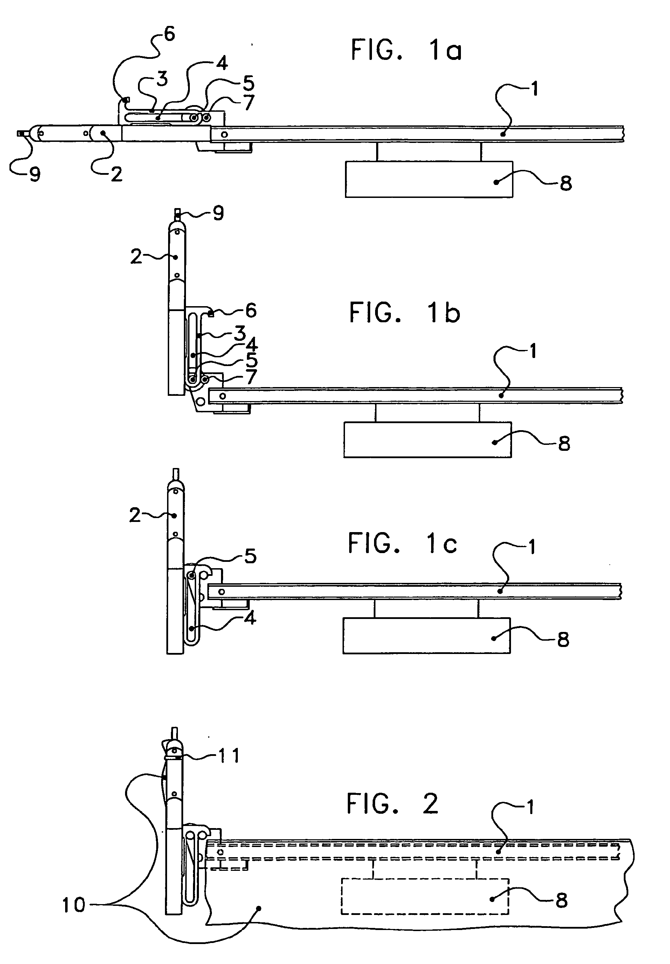

Figure 1a shows an agricultural device in the working position with a frame 1, a side panel 2, an element 3 of a fold-up device with a slot 4 provided therein, a shaft part 5 about which the side panel is rotatable, a locking device consisting of a hook 6 and an engagement point 7, a few working devices 8, such as mowing discs, and a handle 9.

Figure 1b shows the agricultural device 1 in the position between the working position and the transport position.

Figure 1c shows the agricultural device in the transport position.

After operation, the agricultural device is brought into the transport position. In the working position, the side panel 2 remains substantially in a vertical position, parallel to the frame. This creates additional space in which the mowed grass can be scattered from the working devices 8. The side panel 2, which can be embodied in the form of a clip or a plate, optionally covered by a protective tarpaulin 10, is raised with the aid of the handle 9 until it reaches the position as indicated in Figure 2. The angle between the side panel 2 and the frame 1 is substantially 90 degrees. Optionally, this angle can have a different value, i.e. be positioned obliquely. The shaft part 5 of the side panel 2, about which the side panel rotates, is located on the frame 1 and runs through the slot 4 of the element 3 of the fold-up device. When the side panel is completely folded up, then the working devices 8 cannot be protected. For this reason, the side panel is subsequently pressed downward, as a result of which the side panel descends over the length of the slot until the shaft part presses against the top point of the slot. At this moment, the hook 6 engages with the engagement point, thereby locking the side panel. Locking is also possible if the shaft part 5 has a particular shape which is the same as the shape of the highest point of the slot. In this way, the side panel is locked by the shaft part itself. As may be seen, the centre of the side panel 2 is located roughly at the level of the point of rotation in the shaft part 5, so that the forces acting thereon are minimal.

Figure 1c shows the agricultural device wherein the side panel 2 is displaced downward and the working devices 8 are protected. The device can be transported.

Figure 2 shows a particular embodiment of the agricultural device in the transport position with a protective tarpaulin 10 and a device 11 for fixing the protective tarpaulin in the transport position. Moreover, Figure 4 shows how the bottom of the frame, to which the working devices 8 are fastened, is protected by the side panel if the length of the side panel is longer than the length of the protective tarpaulin and wherein the length of the slot is equal to the length of the protective tarpaulin. In this way, with the slot having a length which is equal to the height of the protective tarpaulin, the bottom of the frame, to which the working devices 8 are fastened, is protected by the portion of the side panel having a spacing which is equal to the length of the slot and, respectively, the height of the protective tarpaulin.

## Claims

1. Device for carrying out an agricultural operation, and in particular working vegetation located on the ground, wherein the device comprises:
a frame (1) and a side panel (2) which is fastened thereto in a longitudinal direction of the frame by means of a fold-up device and which is foldable by said fold-up device between a substantially horizontal working position and a substantially vertical transport position, wherein the fold-up device comprises:
a shaft part (5) connected to the frame,
**characterized in that** the fold-up device also comprises:
an element (3) of the fold-up device, which element is fastened to the side panel and has a slot (4) which is substantially vertical in the transport position, which slot is rotatable about the shaft part and is positioned in such a way with respect to the shaft part that the side panel is downwardly displaceable along the shaft part after folding-up.

2. Device according to Claim 1, wherein the device is provided with a locking device for locking the side panel in the transport position.

3. Device according to Claim 1 or 2, wherein a foldable side panel is fastened to two ends of the frame.

4. Device according to any preceding claim, wherein the side panel is fastened to the frame by at least two hinges, wherein each hinge comprises an element (3) of the fold-up device, which element is fastened to the side panel and has a slot (4) which is substantially vertical in the transport position, which slot is rotatable about the shaft part and is positioned in such a way with respect to the shaft part that the side panel is downwardly displaceable along the shaft part after folding-up.

5. Device according to any preceding claim, wherein each side panel comprises at least one handle (9).

6. Device according to any preceding claim, wherein the side panel is provided with a protective tarpaulin (10).

7. Device according to Claim 6, wherein the device is provided with a device (11) for fixing the protective tarpaulin in the transport position.

8. Device according to Claim 6 or 7, wherein the length of the slot is at most equal to the height of the protective tarpaulin if the side panel is longer than the height of the protective tarpaulin.

9. Device according to Claim 6 or 7, wherein the length of the slot is at most equal to the height of the side panel if the side panel is shorter than the height of the protective tarpaulin.

## Patentansprüche

1. Vorrichtung zur Ausführung einer landwirtschaftlichen Tätigkeit und insbesondere zum Bearbeiten von auf dem Boden befindlicher Vegetation, wobei die Vorrichtung umfasst:
einen Rahmen (1) und eine Seitenplatte (2), welche daran in einer Längsrichtung des Rahmens mittels einer Hochklappvorrichtung befestigt ist und welche klappbar durch die Hochklappvorrichtung zwischen einer im Wesentlichen horizontalen Arbeitsposition und einer im Wesentlichen vertikalen Transportposition ist, wobei die Hochklappvorrichtung umfasst:
einen Schaftteil (5), welcher mit dem Rahmen verbunden ist,
**dadurch gekennzeichnet, dass** die Hochklappvorrichtung ebenfalls umfasst:
ein Element (3) der Hochklappvorrichtung, wobei das Element an der Seitenplatte befestigt ist und einen Schlitz (4) aufweist, welcher in der Transportposition im Wesentlichen vertikal ist, wobei der Schlitz um den Schaftteil drehbar ist und auf solche Weise in Bezug auf den Schaftteil positioniert ist, dass die Seitenplatte nach dem Hochklappen entlang des Schaftteils nach unten verschiebbar ist.

2. Vorrichtung nach Anspruch 1,
wobei die Vorrichtung mit einer Verriegelungsvorrichtung zum Verriegeln der Seitenplatte in der Transportposition ausgestattet ist.

3. Vorrichtung nach Anspruch 1 oder 2,
wobei eine klappbare Seitenplatte an zwei Enden des Rahmens angebracht ist.

4. Vorrichtung nach einem der vorhergehenden Ansprüche,
wobei die Seitenplatte am Rahmen durch mindestens zwei Scharniere befestigt ist, wobei jedes Scharnier ein Element (3) der Hochklappvorrichtung umfasst, wobei das Element an der Seitenplatte befestigt ist und einen Schlitz (4) aufweist, welcher in der Transportposition im Wesentlichen vertikal ist, wobei der Schlitz um den Schaftteil drehbar ist und auf solche Weise in Bezug auf den Schaftteil positioniert ist, dass die Seitenplatte nach dem Hochklappen nach unten entlang des Schaftteils verschiebbar ist.

5. Vorrichtung nach einem der vorhergehenden Ansprüche,
wobei jede Seitenplatte wenigstens einen Handgriff (9) umfasst.

6. Vorrichtung nach einem der vorhergehenden Ansprüche,
wobei die Seitenplatte mit einer schützenden Plane (10) versehen ist.

7. Vorrichtung nach Anspruch 6,
wobei die Vorrichtung mit einer Vorrichtung (11) zum Befestigen der schützenden Plane in der Transportposition ausgestattet ist.

8. Vorrichtung nach Anspruch 6 oder 7,
wobei die Länge des Schlitzes höchstens gleich der Höhe der schützenden Plane ist, wenn die Seitenplatte länger als die Höhe der schützenden Plane ist.

9. Vorrichtung nach Anspruch 6 oder 7,
wobei die Länge des Schlitzes höchstens gleich der Höhe der Seitenplatte ist, wenn die Seitenplatte kürzer als die Höhe der schützenden Plane ist.

## Revendications

1. Dispositif destiné à exécuter une opération agricole, et en particulier un travail sur de la végétation qui se trouve sur le sol, dans lequel le dispositif comprend :
un bâti (1) et un panneau latéral (2) qui est attaché à celui-ci dans une direction longitudinale du bâti au moyen d'un dispositif de pliage et qui peut être plié par ledit dispositif de pliage entre une position de travail sensiblement horizontale et une position de transport sensiblement verticale, dans lequel le dispositif de pliage comprend :
une partie arbre (5) connectée au bâti,
**caractérisé en ce que** le dispositif de pliage comprend en outré :
un élément (3) du dispositif de pliage, lequel élément est attaché au panneau latéral et présente une fente (4) qui est sensiblement verticale dans la position de transport, laquelle fente peut tourner autour de la partie arbre et est positionnée, par rapport à la partie arbre, de telle manière que le panneau latéral puisse se déplacer vers le bas le long de la partie arbre après pliage.

2. Dispositif selon la revendication 1, dans lequel le dispositif est doté d'un dispositif de verrouillage destiné à verrouiller le panneau latéral dans la position de transport.

3. Dispositif selon la revendication 1 ou 2, dans lequel un panneau latéral pliable est attaché à deux extrémités du bâti.

4. Dispositif selon l'une quelconque des revendications précédentes, dans lequel le panneau latéral est attaché au bâti par au moins deux charnières, dans lequel chaque charnière comprend un élément (3) du dispositif de pliage, lequel élément est attaché au panneau latéral et présente une fente (4) qui est sensiblement verticale dans la position de transport, laquelle fente peut tourner autour de la partie arbre et est positionnée, par rapport à la partie arbre, de telle manière que le panneau latéral puisse se déplacer vers le bas le long de la partie arbre après pliage.

5. Dispositif selon l'une quelconque des revendications précédentes, dans lequel chaque panneau latéral comprend au moins une poignée (9).

6. Dispositif selon l'une quelconque des revendications précédentes, dans lequel le panneau latéral est doté d'une bâche protectrice (10).

7. Dispositif selon la revendication 6, dans lequel le dispositif est doté d'un dispositif (11) destiné à fixer la bâche protectrice dans la position de transport.

8. Dispositif selon la revendication 6 ou 7, dans lequel la longueur de la fente est tout au plus égale à la hauteur de la bâche protectrice si le panneau latéral est plus long que la hauteur de la bâche protectrice.

9. Dispositif selon la revendication 6 ou 7, dans lequel la longueur de la fente est tout au plus égale à la hauteur du panneau latéral si le panneau latéral est plus court que la hauteur de la bâche protectrice.
